# EUROPEAN PATENT APPLICATION

(11) **EP 2 065 218 A1**
(43) Date of publication of application: **03.06.2009**
(21) Application number: 07381075.6
(22) Date of filing: 30.11.2007
(51) Int. Cl.: B44C 1/17, C09D 5/03, C09D 167/00

(54) **Process of decoration of powder coated substrates**

(71) Applicant: DuPont Powder Coatings Ibérica, S.L., 08191 Rubi Barcelona (ES); E.I. DU PONT DE NEMOURS AND COMPANY, Wilmington, DE 19898 (US)
(72) Inventor: Marelli, Ernesto, F-42600, Savigneux (FR); Rodriguez-Santamarta, Carlos, E-08002, Barcelona (ES); Rekowski, Volker, D-45549, Sprockhoevel (DE)
(74) Representative: Elzaburu Marquez, Alberto

(57) **Abstract**

The present invention is directed to process of decorating a powder coated substrate comprising the steps
(a) treating a substrate surface to be coated,
(b) applying a powder coating composition on the treated substrate surface and curing the powder coating composition, and
(c) covering the cured powder coating with a support comprising a decoration, and transfer the decoration onto the coated substrate surface by heating,

wherein a powder coating composition is used comprising
(A) 30 to 80 wt% of a mixture of at least one polyester resin A having a hydroxyl number in the range of 30 to 60 mg KOH/g, a weight average molar mass Mn in a range of 3100 to 5000 and a glass transition temperature Tg of 40 to 60 °C and at least one polyester resin B having a hydroxyl number in the range of 250 to 350 mg KOH/g, a weight average molar mass Mn in a range of 2000 to 3000,
(B) 10 to 40 wt% of at least one hardener selected from the group consisting of diisocyanates, polyisocyanates and urethdiones, and
(C) 0,01 to 40 wt% of at least one coating additive, pigment and/or filler, the wt% being based on the total weight of the powder coating composition, and wherein the transfer by heating is performed in a temperature range between 160 °C and 220 °C.

The process provides a coated substrate surface with permanent decorations on it and additionally with a very good anti-graffiti performance for a long time period.

## Description

### Field of the Invention

The present invention is directed to a process of decorating a powder coated substrate providing enhanced properties of the decorated coating.

### Description of Prior Art

Decoration of coated substrates may be proceed by heat transfer of the decoration to the coated substrate via a sublimation process known in the art, in general.

Such processes are described, for example, in WO 96/29208 and WO 98/08694. EP-A 0060107 discloses a transfer printing on coatings based on thermosetting materials such as alkyd, polyester, polyurethane or epoxy paint.

EP-A 1140524 refers to the preparation of decorated substrates using a sublimation process under specific conditions whereby the substrates may be coated with a powder coating composition which is cured under specific conditions. EP-A 1162241 discloses thermally curing powder coating compositions suitable for the preparation of a decorated substrate.

There is a need to provide coated substrates with decorations whereby the coatings on these substrates show dirt-repellent properties, in particular, provide anti-graffiti protection of the decorated substrate for a long time period in a sufficient quality.

### Summary of the Invention

The present invention provides a process of decorating a powder coated substrate comprising the steps
(a) treating a substrate surface to be coated,
(b) applying a powder coating composition on the treated substrate surface and curing the powder coating composition, and
(c) covering the cured powder coating with a support comprising a decoration, and transfer the decoration onto the coated substrate surface by heating,
wherein a powder coating composition is used comprising
(A) 30 to 80 wt% of a mixture of at least one polyester resin A having a hydroxyl number in the range of 30 to 60 mg KOH/g, a weight average molar mass Mn in a range of 3100 to 5000 and a glass transition temperature Tg of 40 to 60 °C and at least one polyester resin B having a hydroxyl number in the range of 250 to 350 mg KOH/g, a weight average molar mass Mn in a range of 2000 to 3000,
(B) 10 to 40 wt% of at least one hardeners selected from the group consisting of diisocyanates, polyisocyanates and urethdiones, and
(C) 0,01 to 40 wt% of at least one coating additive, pigment and/or filler, the wt% being based on the total weight of the powder coating composition, and
wherein the transfer by heating is performed in a temperature range between 160 °C to 220 °C.

The process according to the invention provides a coated substrate surface with permanent decorations on it and additionally with a very good anti-graffiti performance for a long time period besides good coating properties such as high exterior durability and chemical resistance.

### Detailed Description of the Invention

The features and advantages of the present invention will be more readily understood, by those of ordinary skill in the art, from reading the following detailed description. It is to be appreciated those certain features of the invention, which are, for clarity, described above and below in the context of separate embodiments, may also be provided in combination in a single embodiment. Conversely, various features of the invention that are, for brevity, described in the context of a single embodiment, may also be provided separately or in any sub-combination. In addition, references in the singular may also include the plural (for example, "a" and "an" may refer to one, or one or more) unless the context specifically states otherwise.

The slight variations above and below the stated ranges of numerical values can be used to achieve substantially the same results as values within the ranges. Also, the disclosure of these ranges is intended as a continuous range including every value between the minimum and maximum values.

All patents, patent applications and publications referred to herein are incorporated by reference in their entirety.

All the number or weight average molar mass data stated in the present description are determined or to be determined by gel permeation chromatography (GPC; divinylbenzene-cross-linked polystyrene as the immobile phase, tetrahydrofuran as the liquid phase, polystyrene standards).

With regard to step (a) of the process according to the invention the substrate to be coated may be treated by well-known methods to clean the surface such as brushing, washing, de-greasing, phosphating and/or chromating known to person skilled in the art. The substrate surface may also be pre-heated before the application of the powder composition, and then either heated after the application of the powder or not. For example, gas is commonly used for various heating steps, but other methods, e.g., microwaves, conduction methods, Infrared (IR) radiation, near infrared (NIR) radiation, electrical induction heating are also known. Catalytic gas infrared ovens and electric infrared oven are commonly used, frequently coupled with gas convection ovens.

The application of the powder coating composition on the treated surface in step (b), may be done by, e.g., electrostatic spraying, thermal or flame spraying, or fluidized bed coating methods, all of which are known to those skilled in the art.

The coating compositions may be applied to, e.g., metallic substrates, non-metallic substrates, such as, paper, wood, plastics, glass and ceramics, including heat-sensitive substrates, as a one-coating system or as coating layer in a multi-layer film build.

The powder coating compositions according to the invention can be applied directly on the substrate surface or on a layer of a primer which can be a liquid or a powder based primer, for example, a conductive primer in case of the coating of non-conductive substrates like wood or MDF. The powder coating composition according to the invention can also be applied as a coating layer of a multilayer coating system based on liquid or powder coats, for example, based on a powder or liquid clear coat layer applied onto a color-imparting and/or special effect-imparting base coat layer or a pigmented one-layer powder or liquid top coat applied onto a prior coating.

The applied and melted powder coating layer can be cured by thermal energy. The coating layer may, for example, be exposed by convective, gas and/or radiant heating, e.g., infra red (IR) and/or near infra red (NIR) irradiation, as known in the art, to temperatures of, e.g., 100°C to 300°C, preferably of 180°C to 280°C (object temperature in each case).

If the composition according to the invention is used together with unsaturated resins and, optionally photo-initiators or with unsaturated resin containing powders, dual curing may also be used. Dual curing means a curing method of the powder coating composition according to the invention where the applied composition can be cured, e.g., both by high energy radiation such as, e.g. ultra violet (UV) irradiation, and by thermal curing methods known by a skilled person. In step (b) a powder coating composition can be used comprising
(A) 30 to 80 wt% of a mixture of at least one polyester resin A having a hydroxyl number in the range of 30 to 60 mg KOH/g, a weight average molar mass Mn in a range of 3100 to 5000 and a glass transition temperature Tg of 40 to 60 °C and at least one polyester resin B having a hydroxyl number in the range of 250 to 350 mg KOH/g, a weight average molar mass Mn in a range of 2000 to 3000,
(B) 10 to 40 wt% of at least one hardeners selected from the group consisting of diisocyanates, polyisocyanates and urethdiones, and
(C) 0,01 to 40 wt% of at least one coating additive, pigment and/or filler, the wt% being based on the total weight of the powder coating composition. Suitable polyester resins of component A) are polyester resins A having a hydroxyl number in the range of 30 to 60 mg KOH/g, a weight average molar mass Mn in a range of 3100 to 5000 and a glass transition temperature Tg of 40 to 60 °C and polyester resins B having a hydroxyl number in the range of 250 to 350 mg KOH/g, a weight average molar mass Mn in a range of 2000 to 3000.

The polyesters may be produced in a conventional manner by reacting of one or more aliphatic, aromatic or cycloaliphatic di- or polycarboxylic acids, and the anhydrides and/or esters thereof with polyalcohols, as is, for example, described in D.A. Bates, The Science of Powder Coatings, volumes 1 & 2, Gardiner House, London, 1990, and as known by the person skilled in the art. For example, the polyesters may be produced in conventional manner by performing an esterification reaction of the acid component with the alcohol component in a nitrogen atmosphere, for example, at temperatures of between 140 and 260°C, with or without use of conventional esterification catalysts.

Examples of suitable polycarboxylic acids, and the anhydrides and/or esters thereof include maleic acid, fumaric acid, malonic acid, adipic acid, 1.4-cyclohexane dicarboxylic acid, isophthalic acid, terephthalic acid, acrylic acid, and their anhydride form, or mixtures thereof. Examples of suitable polyalcohols are benzyl alcohol, butanediol, hexanediol, ethylene glycol, diethylene glycol, pentaerytritol, neopentyl glycol, propylene glycol, and mixtures thereof, in general.

The suitable polycarboxylic acids and the suitable polyalcohols are selected in such a way that the polyesters A and the polyesters B according to this invention are obtained having the described hydroxyl number, the weight average molar mass Mn and the glass transition temperature Tg of 40 to 60 °C.

The polyester mixture of component A) may be used together with small amounts of carboxyl-group containing polyesters, for example 0 to 10 wt% of carboxyl-group containing polyesters having a carboxyl-value of, for example, 10 to 200.

Preferred is the use of hydroxyl-functionalized polyesters without any addition or with limited addition of carboxyl- group containing polyesters.

Crystalline and/or semicrystalline saturated hydroxyl functional polyester resins are also usable which have a Tm (melting temperature) in the range of e.g., 50 to 150°C, determined by means of DSC.

The polyesters of the invention can also be partially self cross-linkable polyesters containing cross-linkable functional groups known by a person skilled in the art.

The content of the polyester resin mixture (A) may be preferably in a range, for example, between 40 to 65 wt%, particularly preferred between 40 to 60 wt%, the wt% being based on the total weight of the powder coating composition.

The mixing ratio of polyester A to polyester B is in the range of 70 : 30 to 80 : 20, preferably in a range of 75 : 25.

Component B) of this invention is used as hardener of Component A). Hardeners may be used as component B) selected from the group consisting of diisocyanates, polyisocyanates and urethdiones, as blocked or unblocked compounds.

Examples of diisocyanates and polyisocyanates are isophorone diisocyanate (IPDI), hexamethylene diisocyanate (HDI), toluylene diisocyanate, diphenylmethane diisocyanate, trimethylhexane diisocyanate, cyclohexane diisocyanate, cyclohexanedimethylene diisocyanate, tetramethylenexylylene diisocyanate, dicyclohexylmethane diisocyanate or the trimerization products, for example, aliphatic diisocyanate-based isocyanurates or mixtures thereof. Aromatic diisocyanate compounds may also be present, such as, for example, tolylene diisocyanate (TDI), diphenylalkyl diisocyanates or mixtures thereof. Examples of urethdiones are Vestagon® BF1320 (Degussa), Crelan® EN403 (Bayer).

The diisocyanates, polyisocyanates and urethdiones can be used also in blocked form. Blocking may proceed with conventional agents, e.g., with monoalcohols, glycol ethers, ketoximes, lactams, malonic acid esters, acetoacetic acid esters, for example, ethylene glycol monobutyl ether, butanone oxime, phenol, ethyl acetoacetate, dimethylpyrazole or caprolactam.

Preferred is the use of at least one urethdione.

The content of the hardeners (B) may be preferably in a range, for example, between 15 and 40 wt%, particularly preferred between 30 to 40 wt%, the wt% being based on the total weight of the powder coating composition.

The powder coating composition according to the invention may contain as further components (C) the constituents conventional in powder coating technology, such as, additives, pigments and/or fillers as known by a person skilled in the art.

Additives are, for example, degassing auxiliaries, flow-control agents, flatting agents, texturing agents, fillers (extenders), catalysts, dyes, antioxidant, anti-UV, tribostatic or corona electrostatic charging auxiliaries. Compounds having anti-microbial activity may also be added to the powder coating compositions.

The crosslinking reaction may be additionally accelerated by the presence in the powder coating composition according to the invention of catalysts known from thermal crosslinking. Such catalysts are, for example, tin salts, bismuth carboxylate, metal complexes, organo-metallic complexes, zirconium chelate complexes. They may be used, for example, in quantities of 0.01 to 3 wt%, based on the total weight of the powder coating composition.

The powder coating composition of this invention may contain transparent, color-imparting and/or special effect-imparting pigments and/or fillers (extenders). Suitable color-imparting pigments are any conventional coating pigments of an organic or inorganic nature considering their heat stability which must be sufficient to support the curing of the powder coating composition of the invention. Examples of inorganic or organic color-imparting pigments are titanium dioxide, micronized titanium dioxide, carbon black, azopigments, and phthalocyanine pigments. Examples of special effect-imparting pigments are metal pigments, for example, made from aluminum, copper or other metals, interference pigments, such as, metal oxide coated metal pigments and coated mica. Examples of usable extenders are silicon dioxide, aluminum silicate, barium sulfate, calcium carbonate, magnesium carbonate, micronized dolomite.

The constituents are used in conventional amounts known to the person skilled in the art, for example, based on the total weight of the powder coating composition, regarding pigments and/or fillers in quantities of 0 to 40 wt.%, preferred 0 to 30 wt%, regarding the additives in quantities of 0,01 to 10 wt%, preferred 1 to 5 wt%.

The powder coating composition according to the invention may be prepared by conventional manufacturing techniques used in the powder coating industry, such as, extrusion and/or grinding processes.

For example, the ingredients used in the powder coating composition, can be blended together and the mixture is extruded. In the extruder the mixture is melted and homogenized, a dispersion of pigments is ensured by shearing effect. The extruded material is then cooled on chill roles, broken up and then ground to a fine powder, which can be classified to the desired grain size, for example, to an average particle size of 20 to 200 µm, preferred 20 to 50 µm.

The powder coating composition may also be prepared by spraying from supercritical solutions, NAD "non-aqueous dispersion" processes or ultrasonic standing wave atomization process.

Furthermore, specific components of the composition according to the invention, for example, additives, pigment, fillers, may be processed with the finished powder coating particles after extrusion and grinding by a "bonding" process using an impact fusion. For this purpose, the specific components may be mixed with the powder coating particles. During blending, the individual powder coating particles are treated to softening their surface so that the components adhere to them and are homogeneously bonded with the surface of the powder coating particles. The softening of the powder particles' surface may be done by heat treating the particles to a temperature, e.g. the glass transition temperature Tg of the composition, in a range, of e.g., 50 to 60°C. After cooling the mixture the desired particle size of the resulted particles may be proceed by a sieving process.

The powder coating composition according to the invention is especially suitable as a coating for the heat transfer of decorations on the substrate coated with the powder coating composition of the invention.

According to step (c) of the process of invention the cured powder coating is covered with a support comprising a decoration, and the decoration is transferred from the support onto the coated substrate surface by heating.

The support is put into contact with the coated substrate surface. The contact between the support and the coated surface can be done and can be maintained by applying physical pressure. Physical pressure means each pressure method which is suitable to keep the support on the coated surface. Another method to keep the contact between the support and the coated surface can be done and can be maintained by closing the support as a bag and applying a vacuum. The support is wound around the coated substrate and is closed, and vacuum is applied. The support will adhere on the coated substrate that is put inside it.

The heat is applied promoting the migration of the inks from the decoration of the support to the coated substrate surface. The heat can be applied, for example, via the press directly to the support and/or on the coated substrate and/or the support. The heating is performed in a temperature range between 160 and 220 °C.

The contact is kept until a partial or a complete transfer of the decoration is achieved. This can be in a time period of, for example, 20 seconds to 3 minutes, at the below mentioned temperature range. After the transfer of the decoration is completed the support is removed.

The support can be a material based on, for example, paper, plastic or textile, for example, as film or sheet.

The present invention is further defined in the following Examples. It should be understood that these Examples are given by way of illustration only, and the present invention is not limited by the illustrative examples set forth herein below, but rather is defined by the claims contained herein below.

### Examples

### Example 1

### Manufacture of a Powder Coating Composition according to the Invention and Application

A powder coating composition according to the invention is prepared using the following ingredients:

| **Formulation 1** | Weight% |
|---|---|
| Polyester A (hydroxyl number 50) | 41 |
| Polyester B (hydroxyl number 300) | 14 |
| Crelan® EN403 (Bayer) | 34 |
| Benzoine | 0.3 |
| Flow agent | 1 |
| Additives | 3 |
| Pigment | 6.7 |

The ingredients are mixed and extruded in an extruder at 120°C. The melt-mixed formulation is then cooled, broken down, and the resulted material is grinded to a D50 value of 35-40µm particle size distribution.

The final powder composition is applied to a metal sheet by corona technique and cured by a convention oven, 15 minutes at 200°C. The resulted dry film thickness is of 70-80 µm.

### Example 2

### Manufacture of a Powder Coating Composition of Prior Art and Application

A powder coating composition of prior art used for heat transfer are prepared using the following ingredients:

| **Formulation 2.1** | Weight% |
|---|---|
| Polyester A (carboxyl number 50 mg KOH/g) | 74.4 |
| Hydroxyalkylamide | 5.6 |
| Benzoine | 0.3 |
| Flow agent | 1 |
| Additives | 3 |
| Pigments | 15.7 |

| **Formulation 2.2** | Weight% |
|---|---|
| Polyester B (carboxyl number 20 mg KOH/g) | 77.6 |
| Hydroxyalkylamide | 2.4 |
| Benzoine | 0.3 |
| Flow agent | 1 |
| Additives | 3 |
| Pigments | 15.7 |

The ingredients of each formulation are mixed and extruded in an extruder at 120°C. The melt-mixed formulation is then cooled, broken down, and the resulted material is grinded to a D50 value of 35-40 µm particle size distribution and then the two resulted compositions based on the Formulation 2.1 and 2.2 are mixed together in a dry blend process. The final powder composition is applied to a metal sheet by corona technique and cured by a convention oven, 15 minutes at 200°C. The resulted dry film thickness is of 70-80 µm.

### Example 3

### Manufacture of a Powder Coating Composition of Prior Art and Application

A powder coating composition of prior art used for heat transfer are prepared using the following ingredients, using polyesters A and B different to polyesters A and B of Example 1 regarding the weight average molar mass Mn:

| **Formulation 3** | Weight% |
|---|---|
| Polyester A (hydroxyl number 50) | 39 |
| Polyester B (hydroxyl number 300) | 22 |
| Uretdione (NCO content 14%) | 32 |
| Benzoine | 0.3 |
| Flow agent | 1 |
| Additives | 2 |
| Pigment | 3.7 |

The application is performed as described above.

### Example 4

### Testing of the Coatings after Sublimation Transfer

The films obtained with the formulations of Example 1, 2 and 3 are decorated by covering them with a heat transfer film containing sublimatic inks and maintaining them in a press at 200°C for 1 minute. After this operation the heat transfer film is removed.

The anti-graffiti and decoration (sublimation) performances are detailed in Table 1 and 2.

**Table 1**

| Antigraffiti products tested: Henkel Magnus 1302, Socostrip T4211, Grafforange bio. Graffiti ink tested: Blue ink. | | | | |
|---|---|---|---|---|
| | **Anti-graffiti Performance** | | | |
| | **Test of aggressiveness** | **Test of efficacy** (Henkel Magnus 1302) | **Test of efficacy** (Socostrip T4211) | **Test of efficacy** (Grafforange bio) |
| **Example 1** | Ok (the antigraffiti products don't damage the surface) | DE: 1.4 | DE: 1.8 | DE: 1.7 |
| **Example 2** | Bad (the antigraffiti products damage the surface) | DE: 4 | DE: 8 | DE: 7 |
| **Example 3** | Bad (the antigraffiti products damage the surface) | DE: 3.94 | DE: 2.62 | DE: 3.29 |

| | | | | |
|---|---|---|---|---|
| **Test of aggressiveness:** aggressiveness evaluation of antigraffiti products used from SNCF (French railway company) on the surface. **Test of efficacy:** graffiti elimination with antigraffiti products. | | | | |

DE is the measure of difference in colour after cleaning the graffity (caused by the graffity product) with the antigraffity products from the surface coated with the formulation. A low value of DE means that the antigraffity products eliminate the graffity without damaging the coated surface.

**Table 2**

| | **Sublimation Performance** | | |
|---|---|---|---|
| | **Transferred image (Decoration)** | **Removal of the heat transfer film** | **Gloss (at 60°)** |
| **Example 1** | Excellent | Easy | 36 |
| **Example 2** | Medium | Difficult (tends to stick) | 33 |
| **Example 3** | Medium | Easy | 36 |

## Claims

1. A process of decorating a powder coated substrate comprising the steps
(a) treating a substrate surface to be coated,
(b) applying a powder coating composition on the treated substrate surface and curing the powder coating composition, and
(c) covering the cured powder coating with a support comprising a decoration, and transfer the decoration onto the coated substrate surface by heating,
wherein a powder coating composition is used comprising
(A) 30 to 80 wt% of a mixture of at least one polyester resin A having a hydroxyl number in the range of 30 to 60 mg KOH/g, a weight average molar mass Mn in a range of 3100 to 5000 and a glass transition temperature Tg of 40 to 60 °C and at least one polyester resin B having a hydroxyl number in the range of 250 to 350 mg KOH/g, a weight average molar mass Mn in a range of 2000 to 3000,
(B) 10 to 40 wt% of at least one hardener selected from the group consisting of diisocyanates, polyisocyanates and urethdiones, and
(C) 0,01 to 40 wt% of at least one coating additive, pigment and/or filler, the wt% being based on the total weight of the powder coating composition, and wherein the transfer by heating is performed in a temperature range between 160 °C and 220 °C.

2. The process according to claim 1 wherein the mixture of polyester A and polyester B is in the range of 40 to 65 wt%.

3. The process according to claim 1 and 2 wherein the mixing ratio of polyester A to polyester B is in the range of 70:30 to 80:20.

4. The process according to claim 1 to 3 wherein the mixing ratio of polyester A to polyester B is in the range of 75 : 25.

5. The process according to claim 1 to 4 wherein diisocyanates and urethdiones are used as component (B).

6. The process according to claim 1 to 5 wherein the transfer by heating is in a time period of 20 seconds to 3 minutes.

7. The process according to claim 1 to 6 wherein the cured powder coating is covered with the support by applying physical pressure and/or by applying vacuum.

8. A substrate decorated with the process according to claims 1 to 7.
